(19) Europäisches Patentamt
European Patent Office
Office européen des brevets

(11) **EP 2 544 322 A1**

(12) **EUROPEAN PATENT APPLICATION**

(43) Date of publication:
**09.01.2013 Bulletin 2013/02**

(51) Int Cl.:
***H02H 7/26*** (2006.01)

(21) Application number: **11460034.9**

(22) Date of filing: **05.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ABB Technology AG**
**8050 Zürich (CH)**

(72) Inventors:
• **Balcerek, Przemyslaw**
  **30-389 Krakow (PL)**

• **Saha, Murari**
  **722 24 Vasteras (SE)**
• **Rosolowski, Eugeniusz**
  **52-403 Wroclaw (PL)**
• **Izykowski, Jan**
  **50-306 Wroclaw (PL)**
• **Pierz, Piotr**
  **50-311 Wroclaw (PL)**

(74) Representative: **Chochorowska-Winiarska, Krystyna**
**ABB Sp. z o. o.,**
**Ul. Zeganska 1**
**04-713 Warszawa (PL)**

(54) **A method of selecting between internal and external faults in parallel lines using one-end measurements**

(57) The present invention is concerned with a method for selecting between internal and external faults in parallel lines using one-end measurements in electric power lines, applicable for power transmission lines, fit for use in the power industry for overhead transmission lines. A method for selecting between internal and external faults in parallel lines using one-end measurements, where the selection functions are implemented by a protective device (1) located at one end of the parallel lines, and where the method contains: measurement of current signals at one end of the line in terminal A or in terminal B, processing of measuring data, determination of pre-fault and fault current signals and the zero-sequence current signal, obtaining current phasors ($I_{A1}$, $I_{B1}$, $I_{C1}$, $I_{A2}$, $I_{B2}$, $I_{C2}$ $I_{01}$, $I_{02}$), characterised in that that the method further comprises the steps of: determination of a symmetrical scaling coefficient ($\kappa_{prefault}$) establishing a reciprocal relation between the currents of a single line of the parallel lines;

determination of the corrected current signal phasors after scaling and calculation of current differences sum for each line (*sdi1, sdi01, sdi2, sdi02*);

determination of the maximum and the minimum of the sum of the current differences (*sdi_max, sdi_0max, sdi_min, sdi_0min*) by comparing the values of the current differences sum (*sdi1, sdi01)* of one of the parallel lines with the current differences sum (*sdi2, sdi02*) of the other line of the parallel lines;

determination of a flag *(Internal_Fault)* having the conventional value of one or zero in order to carry out the selection between an internal or external fault; an automatic presentation of the results to the user by the protective device.

FIG. 1

**Description**

The present invention is concerned with a method for selecting between internal and external faults in parallel lines using one-end measurements in electric power lines, applicable to power transmission lines, fit for use in the power industry for overhead transmission lines.

Distance protection still faces problems when applied to parallel lines with series compensation. Series capacitors shift the fault-loop impedances which results in tripping the healthy line. Additionally, misoperation trips are reported for faults outside the protected line. To avoid this misoperation, the present practice relies on using traditional distance relays but with modified settings. Considerable shortening of the first zone of distance protection reach to 30-40% instead of 85% is applied. As a result of that the quality of protection is not too high.

An example of a protective relay that utilizes the current of a parallel circuit in conjunction with measurements of voltage and current on the protected line is described under US Patent No. US 5956220. In this solution the current ratio for negative or zero sequences is used to avoid incorrect compensation of mutual coupling effect for the relays on the healthy circuit. In US patent application 2003/0011951 the system for preventing the overreach of the protective relay for series compensated power lines is described. This system is based on the comparison of the voltage ratio of the selected measured and calculated phase-to -phase or single phase voltage against the preselected threshold value.

Another example of a method and a distance relay device for use in power transmission lines is described under US patent No. 5367426. In this solution the positive sequence impedance converted into a magnitude and phase angle representation is compared against a load pattern which is also represented by magnitude and phase angle representation. The US patent No. 5367426 is limited to uncompensated transmission line.

All known methods do not utilize current measurements from both circuits of the parallel transmission lines in order to determine if the fault is internal, i.e. within the parallel lines, or external, i.e. outside the parallel lines. In the conventional universal solution the fault direction is determined in order to assure the proper operation of the protective device. However, the determination of the forward direction of the fault does not allow to distinguish between fault within the parallel lines and fault beyond the far remote line end (inside the remote system). The inventive method correctly determines external faults, by which it contributes to correct operation of the protective device.

The invented method is designed to determine whether a detected fault is on the protected line or outside the line. Samples of three-phase currents from both circuits of the parallel lines are the input signals of the selection algorithm. Due to the applied specific kind of measurements the delivered method is considered to be a simple and important supplement to the distance relay for protection of parallel uncompensated or series-compensated lines. The aim of this is fast switching-off of the faulty line.

The invented method can be used for both series compensated and uncompensated parallel transmission lines and also in case when one of the parallel lines works as a series compensated line and the other one of the parallel lines works as an uncompensated line.

The subject of the inventive method using measurement of current signals at one end of the line in terminal A or in terminal B, processing the measuring data, determination of pre-fault and fault current signals and the zero-sequence current signal, and obtaining current phasors ($I_{A1}$, $I_{B1}$, $I_{C1}$, $I_{A2}$, $I_{B2}$, $I_{C2}$, $I_{01}$, $I_{02}$) consists in that the method further comprises the following steps:

- determination of the symmetrical scaling coefficient ($k_{prefault}$) establishing a reciprocal relation between the currents of a single line of the parallel lines,
- determination of the corrected fault current phasors after scaling and calculation of current differences sum for each line ($sdi1$, $sdi01$, $sdi2$, $sdi02$),
- determination of the maximum and the minimum of the sum of the current differences ($sdi\_max$, $sdi\_0max$, $sdi\_min$, $sdi\_0min$) by comparing the values of the current differences sum ($sdi1$, $sdi01$) of one of the parallel lines with the current differences sum ($sdi2$, $sdi02$) of the other line of the parallel lines ,
- determination of the flag ($Internal\_Fault$) having the conventional value of one or zero in order to carry out the selection between an internal or external fault when the following conditions are fulfilled:

$$Internal\_Fault(n) = \begin{cases} 1 \quad when \quad \begin{cases} \dfrac{sdi\_max(n)}{sdi\_min(n)} > sdi_{thr} \quad AND \quad FAULT\_Ph-Ph(n)=1 \\ \qquad\qquad\qquad OR \\ \dfrac{sdi\_0max(n)}{sdi\_0min(n)} > sdi_{thr} \quad AND \quad FAULT\_Ph-G(n)=1 \end{cases} \\ 0 \quad otherwise \end{cases}$$

*where:*

$sdi_{thr}$ - is a different current sum coefficient threshold given by the user,
$n$ - is the real consecutive number of the present digital sample processed by the protective device,
*FAULT_Ph-G*($n$) is a fault type coefficient indicating phase-to-ground faults,
*FAULT_Ph-Ph*($n$) is a fault type coefficient indicating phase-to-phase fault, and next,

when the value of the flag (*Internal_Fault*) is equal to one, then an internal fault within the parallel lines is identified,
when the value of the flag (*Internal_Fault*) is equal to zero, then either an external fault outside the parallel lines is identified, or no fault conditions,

- automatic presentation of the results to the user by the protecting device.

A computer program product comprising a computer program code which when executed on a data processor unit of a protective device carries out the steps of the method according to claims 1-2.

The subject of the inventive system having a protective device with a processor, located at one end of the parallel lines and with a functional module for storing data delivered from an on-line measurement, with a calculating module for doing calculation operations and with an information module for presenting the result of the inventive method is that the protective device has a selection module for performing the actions according to any of the method claims.

Preferably the protective device has a form of a protection relay.

The flag of the Internal_Fault is processed in the other modules of the protective device and support-assures the reliable final operation of the protective device by blocking the tripping signal if a fault occurs outside the protected parallel lines. Thus maloperation of the protective device is avoided.

The inventive method is used in a protective device for protecting parallel transmission lines. A real-time digital current signals coming from current transformers and converted in an A/D converter into a digital signal compatible with IEC 61850 standard are transmitted by the IEC 61850 9-2 protocol or any other communication protocol. The conversion of analogue phase current signals with the aid of the current instrument transformer CT's allows to obtain sampled discrete time values. In this context an interconnection by means of the station communication protocol preferably compatible with the IEC 61850 standard should be regarded as a conventional technique and have therefore been omitted.

The present invention relates to a method of selecting between internal and external faults in parallel lines which is based on one-end current signal measurements from both circuits of the parallel lines. This inventive approach provides high reliability of identification of internal and external faults in parallel lines using one-end measurements.

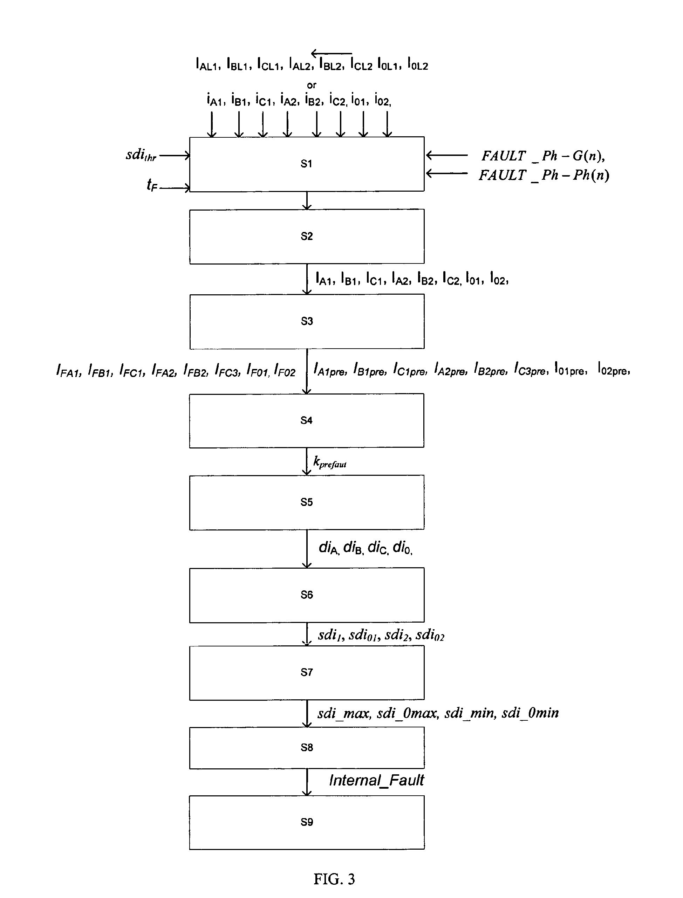

A method of selecting between internal and external faults in parallel lines is presented in the drawing, where fig. 1 shows the schematic system for selecting between internal and external faults in parallel lines using one-end measurements, fig. 2 - the inventive part of the system for selecting between internal and external faults in parallel lines with the use of one-end measurements in a protective relay, fig. 3 - a set of steps for the realisation of the inventive method.

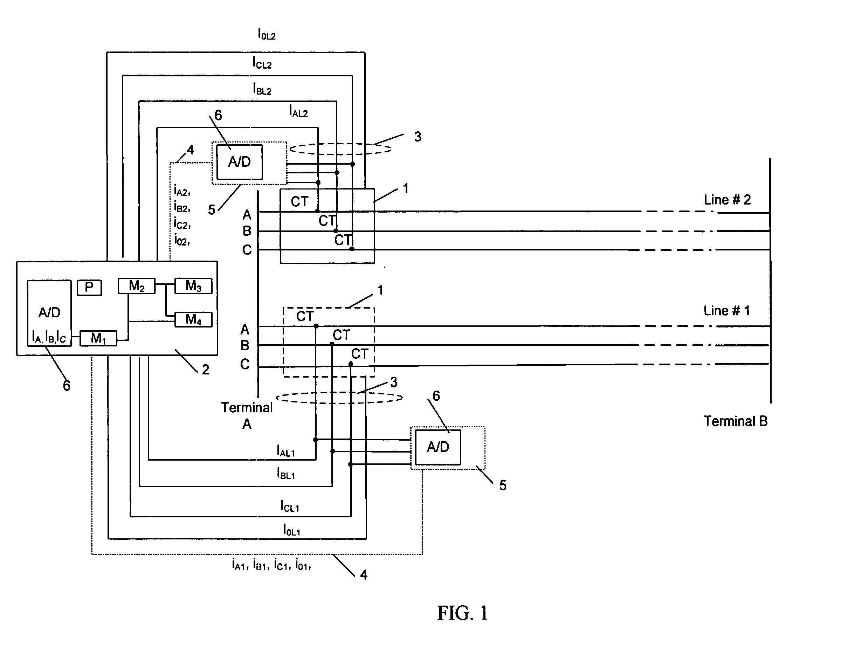

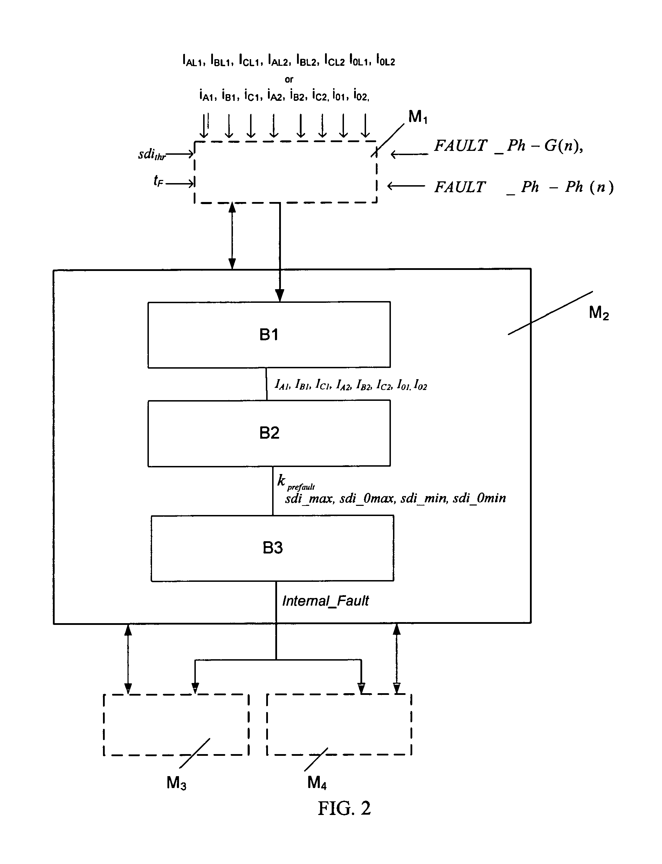

In two parallel lines, Line #1 and Line #2, having a terminal A and a terminal B, current transformers 1 are connected with a protective device 2, having a form of a protection relay by an analogue wire link 3 or by means of a process communication bus 4 containing a Margin Unit 5. The protective device 2 preferably has the form of a protective relay and in the embodiment of the invention it is located in terminal A. The protective device may be placed in terminal B, which is not indicated in the drawing. The protective device 2 with a data processing unit P comprises an A/D converter 6 and an arrangement of functional modules M1, M2, M3, M4 where the module M1 is a buffer module for storing data delivered from an on-line measurement, the module M2 is the module for selecting between internal and external faults, the module M3 is a calculating module connected with the others modules, and the module M4 is an information module for showing the result of the inventive method. In the case where the protective device 2 is connected by the communication bus 4, the A/D converter 6 may be located in the Margin Unit 5 instead of being in the protective relay, which is indicated in the drawing by the dotted line. It is obvious that the protective device comprises other modules and means which are essential for the proper operation of the protective relay, i.e. means for fault detection, and which are not described in the description and not shown in the fig. 1. The module M2 for selecting between internal and external faults in parallel lines, presented in fig. 2, comprises a pre-filtering block B1 for digital current signals filtering, a data analysis block B2 for digital current signals processing, and a decision block B3 for selecting between internal and external faults in parallel lines.

The method according to the invention is carried out in the following steps:

STEP 1 - gathering input measurements and settings

In Step S1, real-time analog current signals $I_{AL1}$, $I_{BL1}$, $I_{CL1}$, $I_{AL2}$, $I_{BL2}$, $I_{CL2}$ from the individual phases A, B, C from both circuits of the parallel lines Line #1 and Line #2 and optional zero sequence currents of both circuits of the parallel lines $I_{0L1}$, $I_{0L2}$ are measured in current transformers. Next the measured data are converted in an A/D converter into digital current signals $i_{A1}$, $i_{B1}$, $i_{C1}$, $i_{A2}$, $i_{B2}$, $i_{C2}$, $i_{01}$, $i_{02}$. and stored in a buffer module M1 of the protective relay.

Additionally, a fault type coefficient $FAULT\_Ph\text{-}G(n)$ indicating a phase-to-ground fault, a coefficient $FAULT\_Ph\text{-}Ph(n)$ indicating a phase-to-phase fault and the fault detection time $t_F$, are taken from other essential modules required for the proper operation of the protective relay. Also in this step a different current sum coefficient $sdi_{thr}$ indicating a threshold value is delivered to the relay by the user. All of those coefficients are stored in the buffer module M1 of the protective relay.

If during the operation of the parallel lines, a phase-to-ground fault occurs, then the coefficient $FAULT\_Ph\text{-}G(n) = 1$ and the coefficient $FAULT\_Ph\text{-}Ph(n) = 0$. If during the operation of the parallel lines a phase-to-phase fault occurs, then the coefficient $FAULT\_Ph\text{-}G(n) = 0$ and the coefficient $FAULT\_Ph\text{-}Ph(n) = 1$. When a phase-to-phase-to-ground fault occurs, both $FAULT\_Ph\text{-}G(n)$ and $FAULT\_Ph\text{-}Ph(n)$ are set to 1.

STEP 2 - Data filtering

Next, in step S2 in a pre-filtering block B1, the digital current signals from the individual phases $i_{A1}$, $i_{S1}$, $i_{C1}$, $i_{A2}$, $i_{B2}$, $i_{C2}$ of both circuits of the parallel lines and zero sequences currents $i_{01}$, $i_{02}$ are filtered using one of the known methods of half period filtering, for example half-period window Fourier filter method, in order to obtain the phasor value of the digital current signals $I_{A1}$, $I_{B1}$, $I_{C1}$, $I_{A2}$, $I_{B2}$, $I_{C2}$ for each individual phase A, B, C of both circuits of the parallel lines , which are represented by magnitude and phase angle. Also zero sequences digital currents $I_{0L1}$, $I_{0L2}$ of both circuits of the parallel lines are filtered in order to obtain the phasor value $I_{01}$ and $I_{02}$. Alternatively, if the zero sequence currents $I_{0L1}$ and $I_{0L2}$ are not measured and delivered in step 1, the phasor value of zero sequence digital currents $I_{01}$, $I_{02}$ can be calculated from the digital current signal according to the following formulas:

$$I_{01} = \frac{1}{3}\left(I_{A1} + I_{B1} + I_{C1}\right),$$

$$I_{02} = \frac{1}{3}\left(I_{A2} + I_{B2} + I_{C2}\right),$$

where:

$I_{A1}$, $I_{B1}$, $I_{C1}$, - A, B, C phasor value of digital current signals in Line #1,
$I_{A2}$, $I_{B2}$, $I_{C2}$, - A, B, C phasor value of digital current signals in Line #2.

STEP 3 - Determination of pre-fault and fault current signals

In step S3, having the phasor value of digital current signals $I_{A1}$, $I_{B1}$, $I_{C1}$, $I_{A2}$, $I_{B2}$, $I_{C2}$, the pre-fault current signals $I_{A1pre}$, $I_{B1pre}$, $I_{C1pre}$, $I_{A2pre}$, $I_{B2pre}$, $I_{C2pre}$, $I_{01pre}$, $I_{02pre}$, and fault current signals $I_{FA1}$, $I_{FB1}$, $I_{FC1}$, $I_{FA2}$, $I_{FB2}$, $I_{FC2}$, $I_{F01}$, $I_{F02}$ are determined by means of one of the known methods, using the fault detection time $t_F$ delivered in step 1. In the embodiment of the invention, the pre-fault current signals are determined using the one period length pre-fault current signals in the pre-filtering block B1.

STEP 4 - Determination of the symmetrical scaling coefficient

In step S4, first, having the pre-fault current signals $I_{A1pre}$, $I_{B1pre}$, $I_{C1pre}$, $I_{A2pre}$, $I_{S2pre}$, $I_{C2pre}$, the average values of the 3-phase digital current signals magnitude $I_{ABC1pre}$, $I_{ABC2pre}$ of both circuits of the parallel lines are calculated in the data analysis block B2 as:

$$I_{ABC1pre} = \frac{1}{3}\left\||I_{A1}| + |I_{B1}| + |I_{C1}|\right\|$$

$$I_{ABC2pre} = \frac{1}{3}\left\||I_{A2}| + |I_{B2}| + |I_{C2}|\right\|$$

Next, the symmetrical scaling coefficient $k_{prefault}$ is determined according to the following formula:

$$k_{prefault} = \frac{\left| I_{ABC1pre} \right|}{\left| I_{ABC2pre} \right|}$$

STEP 5 - Calculation of the difference values of the corrected fault during the fault. In step S5, in the data analysis block B2, the corrected values of current phasors $I_{A1f}$, $I_{B1f}$, $I_{C1f}$, $I_{A2f}$, $I_{B2f}$, $I_{C2}f$ are determined assuming that fault currents from one of the line ( Line #1 or Line #2) are taken as reference corrected values of current phasors according to the following formulas:

• if the reference line is the Line # 1 then:

$$I_{A1f}(n) = I_{FA1}(n), \quad I_{B1f}(n) = I_{FB1}(n), \quad I_{C1f}(n) = I_{FC1}(n), \; I_{01f}(n) = I_{F01}(n)$$

$$I_{A2f}(n) = k_{prefault} * I_{FA2}(n), \quad I_{B2f}(n) = k_{prefault} * I_{FB2}(n), \quad I_{C2f}(n) = k_{prefault} * I_{FC2}(n), \; I_{02f}(n) = I_{F02}(n)$$

where:

n- is the real consecutive number of the present digital sample processed by the relay

• if the reference line is the Line # 2 then

$$I_{A2f}(n) = I_{FA2}(n), \quad I_{B2f}(n) = I_{FB2}(n), \quad I_{C2f}(n) = I_{FC2}(n), \; I_{02f}(n) = I_{F02}(n)$$

$$I_{A1f}(n) = 1/k_{prefault} * I_{FA1}(n), \quad I_{B1f}(n) = 1/k_{prefault} * I_{FB1}(n), \quad I_{C1f}(n) = 1/k_{prefault} * I_{FC1}(n), \; I_{01f}(n) = I_{F01}(\prime$$

where:

n- is the real consecutive number of the present digital sample processed by the relay

Next, having the corrected values of the current phasors $I_{A1f}$, $I_{B1f}$, $I_{C1f}$, $I_{A2f}$, $I_{B2f}$, $I_{C2f}$, the pre-fault current signals $I_{A1pre}$, $I_{B1pre}$, $I_{C1pre}$, $I_{A2pre}$, $I_{B2pre}$, $I_{C2pre}$ and the average value of the 3-phase digital current signals magnitude $I_{ABC1pre}$, $I_{ABC2pre}$, the difference values of the corrected fault current $di_{A1}$, $di_{B1}$, $di_{C1}$, $di_{01}$, $di_{A2}$, $di_{B2}$, $di_{C2}$, $di_{02}$ are determined in the data analysis block B2 for each of the circuits of the parallel transmission line according to the following formulas:

for Line #1:

$$di_{A1}(n) = \left\| I_{A1f}(n) \right| - \left| I_{A1pre} \right\|,$$

$$di_{B1}(n) = \left\| I_{B1f}(n) \right| - \left| I_{B1pre} \right\|,$$

$$di_{C1}(n) = \left\| I_{C1f}(n) \right| - \left| I_{C1pre} \right\|,$$

$$di_{01}(n) = \left\| I_{01f}(n) \right| - \left| I_{01pre} \right\|$$

for Line #2

$$di_{A2}(n) = \left\| I_{A2f}(n) \right\| - \left| I_{A2pre} \right.$$

$$di_{B2}(n) = \left\| I_{B2f}(n) \right\| - \left| I_{B2pre} \right\|,$$

$$di_{C2}(n) = \left\| I_{C2f}(n) \right\| - \left| I_{C2pre} \right\|,$$

$$di_{02}(n) = \left\| I_{02f}(n) \right\| - \left| I_{02pre} \right.$$

STEP 6 - Calculation of the current differences sum

In step 6, having the difference values of the corrected fault current $di_{A1}$, $di_{B1}$, $di_{C1}$, $di_{01}$, $di_{A2}$, $di_{B2}$, $di_{C2}$, $di_{02}$, the sums of the current differences $sdi_1$, $sdi_{01}$, $sdi_2$, $sdi_{02}$ are calculated in the data analysis block B2 according to the following formulas:

for $n$=1 and for Line #1:

$$sdi_1(n) = di_{A1}(n) + di_{B1}(n) + di_{C1}(n),$$

$$sdi_{01}(n) = di_{01}(n)$$

for $n$=1 and for Line #2:

$$sdi_2(n) = di_{A2}(n) + di_{B2}(n) + di_{C2}(n),$$

$$sdi_{02}(n) = di_{02}(n)$$

for $n$>1 and for Line #1

$$sdi_1(n) = sdi_1(n-1) + di_{A1}(n) + di_{B1}(n) + di_{C1}(n)$$

$$sdi_{01}(n) = sdi_{01}(n-1) + di_{01}(n)$$

for $n$>1 and for Line #2:

$$sdi_2(n) = sdi_2(n-1) + di_{A2}(n) + di_{B2}(n) + di_{C2}(n)$$

$$sdi_{02}(n) = sdi_{02}(n-1) + di_{02}(n)$$

STEP 7 - Determination of the maximum and the minimum values of the sum of the current differences

In step S7, having the sum of the current differences $sdi1$, $sdi01$, $sdi2$, $sdi02$, the min and max values of the sum of the current differences $sdi\_max$, $sdi\_0max$, $sdi\_min$, $sdi\_0min$ are determined in this way:

IF $sdi_1(n) \geq sdi_2(n)$      THEN $sdi\_max(n) = sdi_1(n)$ and $sdi\_min(n) = sdi_2(n)$;

(continued)

IF $sdi_1(n) < sdi_2(n)$    THEN $sdi\_max(n) = sdi_2(n)$ and $sdi\_min(n) = sdi_1(n)$;
IF $sdi_{01}(n) \geq sdi_{02}(n)$    THEN $sdi\_0max(n) = sdi_{01}(n)$ and $sdi\_0min(n) = sdi_{02}(n)$;
IF $sdi_{01}(n) < sdi_{02}(n)$    THEN $sdi\_0max(n) = sdi_{02}(n)$ and $sdi\_0min(n) = sdi_{01}(n)$;

STEP 8 - Determination of internal or external fault

In this step, having the minimum and the maximum values of the sum of the current differences $sdi\_max, sdi\_0max, sdi\_min, sdi\_0min$ the flag $Internal\_Fault(n)$, indicating an internal or external fault is calculated in the decision block B3 according to the following formulas:

$$Internal\_Fault(n) = \begin{cases} 1 & when \begin{cases} \dfrac{sdi\_max(n)}{sdi\_min(n)} > sdi_{thr} & AND & FAULT\_Ph-Ph(n)=1 \\ & OR \\ \dfrac{sdi\_0max(n)}{sdi\_0min(n)} > sdi_{thr} & AND & FAULT\_Ph-G(n)=1 \end{cases} \\ 0 & otherwise \end{cases}$$

where:

$sdi_{thr}$ - is a different current sum coefficient threshold stored in step 1.

In the embodiment of the invention, the coefficient threshold $sdi_{thr}$ was set to $sdi_{thr} = 5$
This threshold is set according to the configuration of the system parameters.
If the flag $Internal\_Fault(n)$ equals one - that means that the fault occurs within the parallel lines .
If the flag $Internal\_Fault(n)$ equals zero - that means that the fault occurs outside the parallel lines or that no fault occurs.
The zero or one value of the flag $Internal\_Fault(n)$ is a conventional value and the inverse possibility of the selection is contained in the scope of the invention.

STEP 9 - Presentation the result of the selection

In the next step S9 the flag $Internal\_Fault$(n) available in each of the modules M1...M4 is transmitted to the display or to printing devices which are connected to one of the other modules and which are not shown in the drawing. This information is presented to the user of the protective device 2 and is further processed in order to assure the reliable operation of the protective device 2.

**Claims**

1.  A method for selecting between internal and external faults in parallel lines using one-end measurements, where selection functions are implemented by a protective device (2) located at one end of the parallel lines, and where the method contains: measurement of current signals at one end of the line in terminal A or in terminal B, processing of measuring data, determination of pre-fault and fault current signals and the zero-sequence current signal, obtaining of current phasors ($I_{A1}, I_{B1}, I_{C1}, I_{A2}, I_{B2}, I_{C2}, I_{01}, I_{02}$),
    **characterised in that** the method further comprises the steps of:

    • determination of a symmetrical scaling coefficient ($k_{prefault}$) establishing a reciprocal relation between the currents of a single line of the parallel lines,
    • determination of the corrected fault current phasors after scaling and calculation of current differences sum for each line ($sdi1, sdi01, sdi2, sdi02$),
    • determination of maximum and minimum current differences sum ($sdi\_max, sdi\_0max, sdi\_min, sdi\_0min$) by comparing the values of the current differences sum ($sdi1, sdi01$) of one of the parallel lines with the current differences sum ($sdi2, sdi02$) of the other line of the parallel lines,

• determination of a flag (*Internal_Fault*) having the conventional value of one or zero in order to carry out the selection between an internal or external fault when the following conditions are fulfilled:

$$Internal\_Fault(n) = \begin{cases} 1 & when & \begin{cases} \dfrac{sdi\_max(n)}{sdi\_min(n)} > sdi_{thr} & AND & FAULT\_Ph-Ph(n) = 1 \\ & OR \\ \dfrac{sdi\_0max(n)}{sdi\_0min(n)} > sdi_{thr} & AND & FAULT\_Ph-G(n) = 1 \end{cases} \\ 0 & otherwise \end{cases}$$

*where:*

$sdi_{thr}$ - is a different current sum coefficient threshold given by user,
$n$ - is the real consecutive number of the present digital sample processed by the protective device,
*FAULT_Ph-G(n)* is a fault type coefficient indicating a phase-to-ground fault,
*FAULT_Ph-Ph(n)* is a fault type coefficient indicating a phase-to-phase fault, and next

when the value of the flag (*Internal_Fault*) is equal to one, then an internal fault within the parallel lines is identified, when the value of the flag (*intemal_Fault*) is equal to zero, then an external fault outside the parallel lines is identified, or there is no fault,
• automatic presentation of the results to the user by the protective device.

2. A method according to claim 1, **characterised in that** the symmetrical scaling coefficient $k_{prefault}$ is calculated in the following way:

$$k_{prefault} = \frac{|I_{ABC1pre}|}{|I_{ABC2pre}|}$$

where
$I_{ABC1pre}$ is the average value of the 3-phase digital current signals magnitude of one of the parallel lines,
$I_{ABC2pre}$ is the average value of the 3-phase digital current signals magnitude of the other one of the parallel lines.

3. A computer program for selecting between internal and external faults in parallel lines using one-end measurements, which is loadable into and executable on a data processing unit and which computer program, when being executed, performs the steps according to one of the preceding ciams.

4. A system for selecting between internal and external faults in parallel lines using one-end measurements, having a protective device (2) with a processor (P), located at one end of the parallel lines and with a functional module (M1) for storing data delivered from an on-line measurement, with a calculating module (M3) for performing calculation operations and with an information module (M4) for presenting the result of the inventive method, **characterised in that** the protective device (2) has a selection module (M2) for performing the actions according to any of the method claims, which is connected with the other modules (M1, M3, M4).

5. A system according to claim 3 **characterised in that** the protective device (2) has the form of a protection relay.

FIG. 1

$I_{AL1}$, $I_{BL1}$, $I_{CL1}$, $I_{AL2}$, $I_{BL2}$, $I_{CL2}$ $I_{OL1}$, $I_{OL2}$

or

$i_{A1}$, $i_{B1}$, $i_{C1}$, $i_{A2}$, $i_{B2}$, $i_{C2}$, $i_{01}$, $i_{02}$,

$M_1$

$sdi_{thr}$

$t_F$

$\longleftarrow$ FAULT $\_ Ph - G(n)$,

$\longleftarrow$ FAULT $\_ Ph - Ph (n)$

$M_2$

B1

$I_{A1}$, $I_{B1}$, $I_{C1}$, $I_{A2}$, $I_{B2}$, $I_{C2}$, $I_{01}$, $I_{02}$

B2

$k_{prefault}$
$sdi\_max$, $sdi\_0max$, $sdi\_min$, $sdi\_0min$

B3

Internal_Fault

$M_3$          $M_4$

FIG. 2

$I_{AL1}$, $I_{BL1}$, $I_{CL1}$, $I_{AL2}$, $\overleftarrow{I_{BL2}}$, $I_{CL2}$ $I_{0L1}$, $I_{0L2}$

or

$i_{A1}$, $i_{B1}$, $i_{C1}$, $i_{A2}$, $i_{B2}$, $i_{C2}$, $i_{01}$, $i_{02}$,

$sdi_{thr}$ →

$t_F$ →

| S1 |

← $FAULT\_Ph - G(n)$,
← $FAULT\_Ph - Ph(n)$

| S2 |

$I_{A1}$, $I_{B1}$, $I_{C1}$, $I_{A2}$, $I_{B2}$, $I_{C2}$, $I_{01}$, $I_{02}$,

| S3 |

$I_{FA1}$, $I_{FB1}$, $I_{FC1}$, $I_{FA2}$, $I_{FB2}$, $I_{FC3}$, $I_{F01}$, $I_{F02}$ | $I_{A1pre}$, $I_{B1pre}$, $I_{C1pre}$, $I_{A2pre}$, $I_{B2pre}$, $I_{C3pre}$, $I_{01pre}$, $I_{02pre}$,

| S4 |

$k_{prefaut}$

| S5 |

$di_A$, $di_B$, $di_C$, $di_0$,

| S6 |

$sdi_1$, $sdi_{01}$, $sdi_2$, $sdi_{02}$

| S7 |

$sdi\_max$, $sdi\_0max$, $sdi\_min$, $sdi\_0min$

| S8 |

$Internal\_Fault$

| S9 |

FIG. 3

Europäisches
Patentamt

European
Patent Office

Office européen
des brevets

# EUROPEAN SEARCH REPORT

Application Number

EP 11 46 0034

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 796 258 A (YANG LIFENG [US]) 18 August 1998 (1998-08-18) * column 1, line 6 - line 10 * * column 3, line 9 - line 28 * ----- | 1-5 | INV. H02H7/26 |
| A | US 4 896 241 A (LI HUNG J [US] ET AL) 23 January 1990 (1990-01-23) * column 2, line 60 - column 3, line 8 * ----- | 1-5 | |
| A,D | US 5 956 220 A (NOVOSEL DAMIR [US] ET AL) 21 September 1999 (1999-09-21) * column 2, line 48 - column 4, line 2 * * figures 1-3 * ----- | 1-5 | |
| | | | **TECHNICAL FIELDS SEARCHED (IPC)** H02H |

The present search report has been drawn up for all claims

| Place of search | Date of completion of the search | Examiner |
|---|---|---|
| Munich | 30 March 2012 | Bhalodia, Anil |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 46 0034

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2012

| Patent document cited in search report | | Publication date | Patent family member(s) | | Publication date |
|---|---|---|---|---|---|
| US 5796258 | A | 18-08-1998 | NONE | | |
| US 4896241 | A | 23-01-1990 | CA | 2007778 A1 | 31-08-1990 |
| | | | JP | 2273024 A | 07-11-1990 |
| | | | US | 4896241 A | 23-01-1990 |
| US 5956220 | A | 21-09-1999 | AU | 2338799 A | 23-08-1999 |
| | | | CA | 2319479 A1 | 12-08-1999 |
| | | | EP | 1060551 A1 | 20-12-2000 |
| | | | US | 5956220 A | 21-09-1999 |
| | | | WO | 9940662 A1 | 12-08-1999 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5956220 A
- US 20030011951 A
- US 5367426 A